# EUROPEAN PATENT SPECIFICATION

(11) **EP 4 282 629 B1**
(45) Date of publication and mention of the grant of the patent: **19.02.2025**
(21) Application number: 22189530.3
(22) Date of filing: 09.08.2022
(51) Int. Cl.: B29C 70/50, B29C 70/22, B29B 15/12, B29C 35/00, B29C 70/54

(54) **DESIZING OF REINFORCED COMPOSITE MATERIALS**
ENTSCHLICHTEN VON VERSTÄRKTEN VERBUNDWERKSTOFFEN
DÉSENSIMAGE DE MATÉRIAUX COMPOSITES RENFORCÉS

(30) Priority: 24.05.2022 TR 202208414
(43) Date of publication of application: 29.11.2023
(73) Proprietor: Kordsa Teknik Tekstil A.S, 34330 Izmit / Kocaeli (TR)
(72) Inventor: BOZDAG, Baris Koray, 34330 Kocaeli (TR); ATAMAN, Okan, 34330 Kocaeli (TR); HOPLAMAZ, Emre, 34330 Kocaeli (TR); ILGAZ, Yigit Bartu, 34330 Kocaeli (TR); VATAN, Ekrem, 34330 Kocaeli (TR); ERIS, Hasan, 34330 Kocaeli (TR)
(74) Representative: Dericioglu, E. Korhan

(56) References cited:
- MITSCHANG P. ET AL: "Processing technologies for continuous fibre reinforced thermoplastics with novel polymer blends", COMPOSITES SCIENCE AND TECHNOLOGY, vol. 63, no. 14, 1 November 2003 (2003-11-01), AMSTERDAM, NL, pages 2099 - 2110, XP093045667, ISSN: 0266-3538, DOI: 10.1016/S0266-3538(03)00107-6
- KISS PETER ET AL: "The effect of thermally desized carbon fibre reinforcement on the flexural and impact properties of PA6, PPS and PEEK composite laminates: A comparative study", COMPOSITES PART B, ELSEVIER, AMSTERDAM, NL, vol. 215, 28 March 2021 (2021-03-28), XP086577760, ISSN: 1359-8368, [retrieved on 20210328], DOI: 10.1016/J.COMPOSITESB.2021.108844
- MITSCHANG P. ET AL: "Processing technologies for continuous fibre reinforced thermoplastics with novel polymer blends", COMPOSITES SCIENCE AND TECHNOLOGY, vol. 63, no. 14, 1 November 2003 (2003-11-01), AMSTERDAM, NL, pages 2099 - 2110, XP093045667, ISSN: 0266-3538, DOI: 10.1016/S0266-3538(03)00107-6

## Description

### TECHNICAL FIELD

The invention is an in-situ method for desizing and lamination of fibers to be used in fabrics. In-situ desizing of carbon fiber and glass fiber eliminates the pre-process of fiber desizing which increase the mechanical properties of the laminate by preventing fiber breakage. In addition, continuous desizing of the fabric increased efficiency of the process, hence the cost. Market price of the desized fiber is higher than the regular sized fibers, therefore there is additional cost advantage.

### PRIOR ART

Weaving process of unsized fiber is complicated and has many drawbacks like fiber breakage which causes decrease in the laminate mechanical properties. In addition, using unsuitable fiber sizing with thermoplastic materials decrease in the shear strength thus overall mechanical performance.

"Sizing" is a thin, homogenous coating applied to the surface of fibers during the manufacturing process to protect the filaments during handling, and processing, and during subsequent compounding and composite processing. On the fiber surface, the sizing plays an important role in determining the properties of the final composite, such as improved adhesion between the fiber and the matrix, mechanical properties, chemical or water resistance, and thermal stability. Sizing optimizes the processability of fiber. Although sizing is a small percentage of fiber reinforced composites-normally 0.5 - 5% of its weight-it affects the production and the processing of the fiber and has a significant impact on the interface properties between the fiber surface and the composite matrix. Since most of the sizing methods are compatible with the thermoset resin systems, they are not suitable to be used for thermoplastic resin systems. Therefore, in order to process thermoplastic film on the carbon/glass fabric, the sizing should be removed. There are unsized fibers available in the market, however those fibers are very complicated to process and it is more expensive compared to regular sized fibers.

In addition, during the processing, fiber breakage occurs hence the overall mechanical properties of the laminate decreases. Therefore, a sizing removal method needed after the fabric production process.

"The effect of thermally desized carbon fibre reinforcement on the flexural and impact properties of PA6, PPS and PEEK composite laminates: A comparative study" by Peter Kiss et al, studied the effect of thermally de-sized carbon fiber reinforcement on the flexural and impact properties of polyamide 6 (PA6), olyphenylene sulfide (PPS) and Polyetheretherketone (PEEK)composite laminates (Composites Part B 215 (2021) 108844), ISSN: 1359-8368 DOI: 10.2016J.COMPOSITESB.2021.108844.

This document discloses a method comprising a heat treatment in air atmosphere. MITSCHANG P. ET AL: "Processing technologies for continuous fibre reinforced thermoplastics with novel polymer blends", COMPOSITES SCIENCE AND TECHNOLOGY, vol. 63, no. 14, 1 November 2003 (2003-11-01), pages 2099-2110, AMSTERDAM, NL ISSN: 0266-3538, DOI: 10.1016/50266-3538(03)00107-6 discloses a weaving method having steps of guiding warp fibers into a weaving machine, deflecting the fibers to the weaving plane to obtain a fabric, desizing a specimen of the fabric into an infrared desizing process and heating the fabric by using an infrared-irradiation unit.

### BRIEF DESCRIPTION OF THE INVENTION

The invention is a method as defined in claim 1 and an apparatus as defined in claim 12 where desizing is performed "in-situ" for eliminating the pre-processes. According to method of invention desizing is performed during production of the fabric.

The advantage of "in-situ" desizing using conventionally sized carbon or glass fibers and desizing during the production of the intermediate product which is woven fabric which eliminates all the drawbacks of unsized carbon fiber and opening the possibilities to achieve better mechanical properties.

Method of invention comprises high-grade infrared heater placed after the fabric production or before the film lamination process. Since the sizing mostly consist of organic compounds, heating of the sizing evaporates it from surface of the fabric.

### BRIEF DESCRIPTION OF THE DRAWINGS

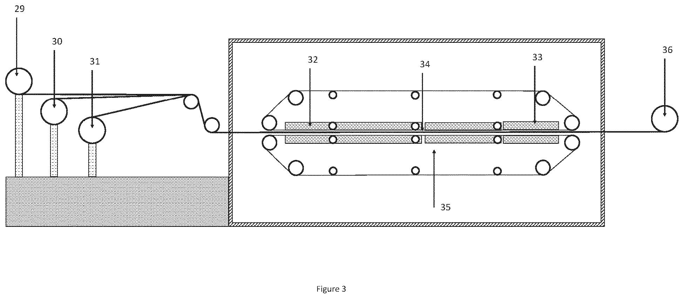

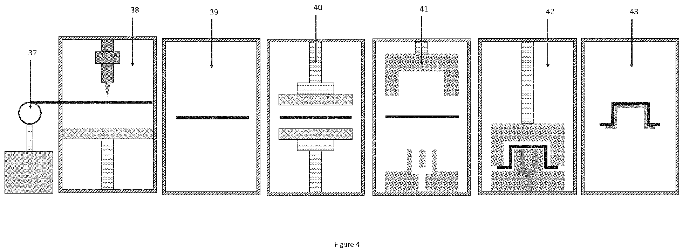

The accompanying drawings, which are incorporated in and constitute a part of this disclosure, illustrate exemplary embodiments and, together with the description, to explain the disclosed principles:
FIG 1. Weaving machine with "In-situ" desizing unit
   1. Creel
   2 Back rail
   3 Heald
   4 Heald frames
   5. Weft insertion svstem
   6. Reed
   7. Sley
   8. Fabric take-off
   9. Fabric beam
   10. Desizing unit
   11. Fabric storage
   A. Weaving Plane
FIG 2. Desizing Unit
   12. Sized Fabric Beam
   13. Desizing unit
   14. First roller
   15. Second roller
   16. First hydraulic arm
   17. Second hydraulic arm
   18. First infrared-irradiation (IR) unit
   19. Second infrared-irradiation (IR) unit
   20. Third roller
   21. Thermometer
   22. Fourth roller
   23. Desized fabric beam
   24. First air fan
   25. Second air fan
   26. First air ventilation unit
   27. Second air ventilation unit
   28. Third air ventilation unit
FIG 3. Lamination Unit
   29. First Thermoplastic Film
   30. Desized Fabric
   31. Second Thermoplastic Film
   32. Heating platen
   33. Cooling platen
   34. First Belt Press
   35. Second Belt Press
   36. Thermoplastic Prepreg Roller
FIG 4. Thermoplastic Composite Part Production Process
   37. Thermoplastic Prepreg Un-winder
   38. Prepreg cutter machine
   39. Direct shape prepreg
   40. Prepreg Heater
   41. Prepreg Press
   42. Over-molding
   43. Over-molded Thermoplastic Composite Part

### DETAILED DESCRIPTION OF THE INVENTION

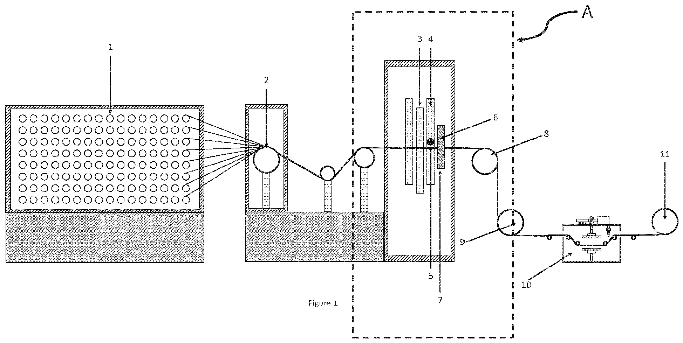

Figure 1 shows the weaving process with "In-situ" desizing unit. The creel (1) stores the warp fibers and delivers them as needed. The warp fibers, especially if they are carbon or glass fibers, must be guided to the weaving machine directly from a bobbin creel. The back rail (2) and the fabric take-off (8) deflect the warp fibers to the weaving plane (A). The back rail is usually mounted flexibly and compensates variations in warp fiber consumption by opening and closing the shed, which is particularly important when working with stiffer fibers. The warp fibers are mostly guided to a heald (3) individually. Weft insertion systems (5) transport the weft fiber through the shed. The reed (6) , which is integrated into the sley (7) , arranges the warp fiber and sets the theoretical warp fiber density of the woven fabric. By the movement of the reed with the sley, the last weft fiber is beat-up to the fabric edge. The fabric take-off device provides the take-off of the woven fabric at a preset speed and adjusts its weft density. In the fabric storage (11) , the woven fabric is then stored temporarily before the next process steps.

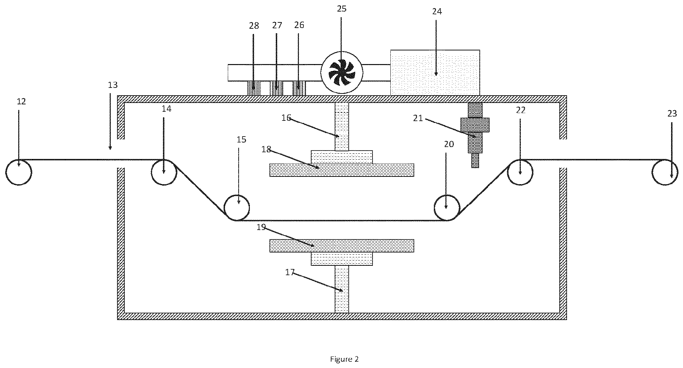

Figure 2 shows desizing process. Woven fabrics are fed into the desizing unit in order to get rid of the sizing of the fiber. The fabric enter the desizing unit (13) by controlling the tension on the fabric. The tension of the fabric precisely controlled with tensing means, preferably rollers located in the desizing unit (14,15,20 22).

The tension of the fabric should be between 0,1 - 10 kN in order to have proper desizing. The desizing unit consist of industrial scale infrared-irradiation (IR) units located in both upper and lower side of the fabric (18) and (19). The fabric temperature should be between 150 to 400 °C in order to get rid of the sizing on the surface of the fiber. The fabric temperature controlled with the help of advanced surface thermometer (21). The distance of the IR unit precisely controlled with the help of hydraulic arms (16, 17). The distance of the IR unit should be 1 cm to 50 cm from the surface of the fabric. If the IR unit distance is lower than expected, there is great risk of damaging the fiber. If the IR unit distance is higher than expected, there is risk of decreasing the efficiency of desizing process. The line speed should be controlled and it should be between 0,5 m/sec and 10 m/sec. With the help of air fan (24,25), the desizing unit constantly fed with air in order to prevent any chemical accumulation. Hot air then sucked by air ventilation units (26,27,28). Reference machine speeds closely controlled. Fan air speed controlled with the help of air temperature and humidity controllers. The oven internal temperature should be between 50 to 400 °C.

Figure 3 shows the lamination process. Thin film of the thermoplastic material produced and fed the lamination process. Two films are placed top (29) and bottom (31) of the feeder and in between desized fabric (30) feed to the lamination line. The temperature and pressure controlled in the lamination line according to the type of polymer used. The lamination temperature should be between 150 to 400 °C in order to achieve expected lamination level. In addition the pressure should be between 5 to 100 bars to fully integrate the resin film onto fibers. The pressure should be keep constant with the help of double belt presses (34, 35). Direct lamination of the film on the fabric allow higher mechanical performance due to high coverage and bonding of the fiber. The laminated prepreg cooled with the help of high performance coolers (33) after the lamination process. The processed prepreg rolled on the high precision prepreg rolls (36).

Thermoplastic Composite Part Production Process is shown in Figure 4. This process is used to produce final product (part) from prepreg obtained after lamination. Rolled prepreg fed to the cutter machine with the help of un-winder (37). Material then cut with a high precision cutter (38). The cut material stacked in order to get the desired thickness hence the desired mechanical performance (39). Material than heated with prepreg heater (40) before fed into pressing (41) on a mold. Heat and pressure applied to the material in order to get the final part geometry in the prepreg press (41). The temperature, time and pressure are defined according to polymer type. The heating can be applied directly from the molding surface and pressure can be applied to the material. In order to separate from the surface of the mold, a cooling process should be applied. Another option would be heating material outside of the mold and applying pressure with the cold molding surface. The temperature defined according to the polymer type. The prepreg heating temperature should be between 150 to 400 °C in order to achieve expected mechanical properties. In addition the press pressure should be between 5 to 100 bars to get the final shape of the part. In order to give better stiffness and mechanical properties injection molding to the prepreg part can be used (42). First part can be produced in the mold after; melted polymer can be injected to the back structure of the part.

## Claims

1. Weaving method having the steps of
• guiding warp fibers into a weaving machine (1),
• deflecting the fibers to the weaving plane (A) to obtain a fabric
• guiding the fabric into a desizing proces,
• heating the fabric by using an infrared-irradiation unit (18, 19) **characterized in that** the distance of said infrared-irradiation unit from the fabric is controlled with a hydraulic arm (16, 17),
• feeding air by an air fan (24,25 and
• sucking hot air by an air ventilation unit (26, 27, 28).

2. Method according to Claim 1 **characterized in that** said guiding step of the fabric into the desizing unit is performed with a tension between 0.1 - 10 kN and with a speed between 0.5-10 m/sec.

3. Method according to Claim 1 **characterized in that** the infrared-irradiation unit (18, 19) is located below and/or above the fabric.

4. Method according to Claim 1 **characterized in that** the heating temperature is between 150 to 400 °C

5. Method according to Claim 1 **characterized in that** the distance of said infrared-irradiation unit is between 1-50 cm from the fabric

6. Method according to Claim 1 further comprising a lamination process after the desizing process where said lamination process is **characterized in**
• feeding desized fabric in between two thermoplastic films
• setting the temperature between 150 to 400 °(,
• keeping pressure constant between 5-100 bars by belt press (34, 35 and
• cooling the laminated prepreg by a cooler (33)

7. Method According to Claim 6 further comprising a part production process after the lamination process where said part production process is **characterized by**
• feeding a prepreg which is a laminated desized fabric, into a cutter machine (38) by an un-winder (37),
• stucking the cut material by direct shaping (39,
• heating the cut material (40,
• pressing the cut material (41) on a mold to obtain final par and
• cooling the par.

8. Method according to Claim 7 **characterized in that** said heating and pressing steps are applied on a molding surface.

9. Method according to Claim 7 **characterized in that** said heating step is applied before molding and pressure is applied via a cold molding surface.

10. Method according to Claim 7 **characterized in that** the heating temperature is between 150-400 °C.

11. Method according to Claim 7 **characterized in that** the pressure in pressing step is between 5-100 bars.

12. Weaving machine with an in-situ desizing unit, said desizing unit being located after the weaving plane (A) and comprising
• an infrared-irradiation unit (18, 19) located preferably below and/or above a fabric,
• a hydraulic arm (16, 17) for controlling the distance of infrared-irradiation unit (18, 19) to the fabric,
• an air fan (24, 25) for feeding air,
• an air ventilation unit (26,27,28) for sucking hot air,
• an air temperature controller and
• a humidity controller.

13. Weaving machine according to Claim 12 **characterized in** further comprising a lamination unit.

## Patentansprüche

1. Webverfahren mit den Schritten;
• Führen von Kettfäden in eine Webmaschine (1),
• Umlenken der Fasern zur Webebene (A), um ein Gewebe zu erhalten,
• Führen des Gewebes in einen Entschlichteprozess,
• Erhitzen des Gewebes mittels einer Infrarot-Bestrahlungseinheit (18, 19), **dadurch gekennzeichnet, dass** der Abstand der genannten Infrarot-Bestrahlungseinheit zum Gewebe mit einem Hydraulikarm (16, 17) gesteuert wird,
• Zuführen von Luft durch ein Luftgebläse (24, 25) und
• Ansaugen von Warmluft durch eine Lüftungseinheit (26, 27, 28).

2. Verfahren nach Anspruch 1, **dadurch gekennzeichnet, dass** der genannte Schritt des Führens des Gewebes in die Entschlichteeinheit mit einer Spannung zwischen 0,1-10 kN und einer Geschwindigkeit zwischen 0,5-10 m/sec durchgeführt wird.

3. Verfahren nach Anspruch 1, **dadurch gekennzeichnet, dass** die Infrarot-Bestrahlungseinheit (18, 19) unterhalb und/oder oberhalb des Gewebes angeordnet ist.

4. Verfahren nach Anspruch 1, **dadurch gekennzeichnet, dass** die Heiztemperatur zwischen 150 und 400 °C liegt.

5. Verfahren nach Anspruch 1, **dadurch gekennzeichnet, dass** der Abstand der genannten Infrarot-Bestrahlungseinheit zum Gewebe zwischen 1 und 50 cm beträgt.

6. Verfahren nach Anspruch 1, das zusätzlich einen Laminierungsprozess nach dem Entschlichteprozess umfasst, wobei der Laminierungsprozess durch folgendes gekennzeichnet ist:
• Zuführen des entschlichteten Gewebes zwischen zwei thermoplastische Folien,
• Einstellen der Temperatur zwischen 150 und 400 °C,
• Halten des Drucks zwischen 5 und 100 bar durch Bandpresse (34, 35) und,
• Abkühlen des laminierten Prepregs durch einen Kühler (33).

7. Verfahren nach Anspruch 6, das weiterhin einen Teilherstellungsprozess nach dem Laminierungsprozess umfasst, wobei der Teilherstellungsprozess durch folgendes gekennzeichnet ist:
• Zuführen eines Prepregs, bei dem es sich um ein laminiertes, entschlichtetes Gewebe handelt, durch einen Abwickler (37) in eine Schneidemaschine (38),
• Stapeln des geschnittenen Materials durch direkte Formgebung (39),
• Erhitzen des geschnittenen Materials (40),
• Pressen des geschnittenen Materials (41) auf eine Form, um das fertige Teil zu erhalten, und
• Abkühlen des Teils.

8. Verfahren nach Anspruch 7, **dadurch gekennzeichnet, dass** die Heiz- und Pressschritte auf einer Formoberfläche durchgeführt werden.

9. Verfahren nach Anspruch 7, **dadurch gekennzeichnet, dass** der Erhitzungsschritt vor dem Formen durchgeführt und der Druck über eine kalte Formoberfläche ausgeübt wird.

10. Verfahren nach Anspruch 7, **dadurch gekennzeichnet, dass** die Heiztemperatur zwischen 150-400 °C liegt.

11. Verfahren nach Anspruch 7, **dadurch gekennzeichnet, dass** der Druck im Pressschritt zwischen 5 und 100 bar liegt.

12. Webmaschine mit einer In-situ-Entschlichteeinheit, wobei die genannte Entschlichteeinheit hinter der Webebene (A) angeordnet ist, und umfassend
• eine Infrarot-Bestrahlungseinheit (18, 19), die vorzugsweise unter und/oder über einem Gewebe angeordnet ist,
• einen hydraulischen Arm (16, 17) zur Steuerung des Abstandes der Infrarot-Bestrahlungseinheit (18, 19) zum Gewebe,
• ein Luftgebläse (24, 25) zum Zuführen von Luft,
• eine Belüftungseinheit (26,27,28) zum Ansaugen von heißer Luft,
• einen Lufttemperaturregler und
• einen Feuchtigkeitsregler.

13. Webmaschine nach Anspruch 12, **dadurch gekennzeichnet dass** sie weiterhin eine Laminiereinheit umfasst.

## Revendications

1. Un procédé de tissage, comprenant les étapes suivantes :
• guider les fibres de chaîne dans un métier à tisser (1),
• dévier les fibres vers le plan de tissage (A) pour obtenir un tissu,
• guider le tissu dans un processus de désencollage,
• chauffer le tissu à l'aide d'une unité d'irradiation infrarouge (18, 19), **caractérisé en ce que** la distance entre ladite unité d'irradiation infrarouge et le tissu est contrôlée par un bras hydraulique (16, 17),
• alimenter en air à l'aide d'un ventilateur (24, 25), et
• aspirer l'air chaud à l'aide d'une unité de ventilation (26, 27, 28).

2. Un procédé selon la revendication 1, **caractérisé en ce que** l'étape de guidage du tissu vers l'unité de désencollage est réalisée avec une tension comprise entre 0,1 et 10 kN et à une vitesse comprise entre 0,5 et 10 m/s.

3. Un procédé selon la revendication 1, **caractérisé en ce que** l'unité d'irradiation infrarouge (18, 19) est située au-dessous et/ou au-dessus du tissu.

4. Un procédé selon la revendication 1, **caractérisé en ce que** la température de chauffage est comprise entre 150 et 400 °C.

5. Un procédé selon la revendication 1, **caractérisé en ce que** la distance entre ladite unité d'irradiation infrarouge et le tissu est comprise entre 1 et 50 cm.

6. Un procédé selon la revendication 1, comprenant en outre un processus de laminage après le processus de désencollage, ledit processus de laminage étant **caractérisé par** :
• introduction du tissu désencollé entre deux films thermoplastiques,
• application d'une température comprise entre 150 et 400 °C,
• application d'une pression comprise entre 5 et 100 bars à l'aide d'une presse à bande (34, 35), et
• refroidissement du préimprégné laminé à l'aide d'un refroidisseur (33).

7. Un procédé selon la revendication 6, comprenant en outre un processus de production de pièces après le processus de laminage, ledit processus de production de pièces étant **caractérisé par** :
• introduction d'un pré-imprégné, constitué un tissu désencollé et laminé, dans une machine de découpe (38) à l'aide d'un dévidoir (37),
• positionnement direct du matériau découpé à l'aide d'une mise en forme directe (39),
• chauffage du matériau découpé (40),
• pressage du matériau découpé (41) sur un moule pour former la pièce finale, et
• refroidissement de la pièce.

8. Un procédé selon la revendication 7, **caractérisé en ce que** les étapes de chauffage et de pressage sont appliquées sur une surface de moulage.

9. Un procédé selon la revendication 7, **caractérisé en ce que** l'étape de chauffage est appliquée avant le moulage et que la pression est appliquée via une surface de moulage froide.

10. Un procédé selon la revendication 7, **caractérisé en ce que** la température de chauffage est comprise entre 150 et 400 °C.

11. Un procédé selon la revendication 7, **caractérisé en ce que** la pression appliquée lors de l'étape de pressage est comprise entre 5 et 100 bars.

12. Un métier à tisser avec une unité de désencollage in-situ, ladite unité de désencollage étant située après le plan de tissage (A) et comprenant :
• une unité d'irradiation infrarouge (18, 19) située de préférence au-dessous et/ou au-dessus d'un tissu,
• un bras hydraulique (16, 17) pour contrôler la distance entre l'unité d'irradiation infrarouge (18, 19) et le tissu,
• un ventilateur (24, 25) pour alimenter en air,
• une unité de ventilation (26, 27, 28) pour aspirer l'air chaud,
• un contrôleur de température de l'air, et
• un contrôleur d'humidité.

13. Un métier à tisser selon la revendication 12, **caractérisé par** la présence supplémentaire d'une unité de laminage.
